# FASCICULE DE BREVET EUROPEEN

(11) **EP 3 577 207 B1**
(45) Date de publication et mention de la délivrance du brevet: **25.11.2026**
(21) Numéro de dépôt: 18704313.8
(22) Date de dépôt: 02.02.2018
(51) Int. Cl.: C12G 1/08

(54) **ADJUVANT DE REMUAGE ET USAGES POUR LA PRODUCTION DE BOISSONS EFFERVESCENTES SELON LA MÉTHODE TRADITIONNELLE**
RÜHRHILFSMITTEL UND VERWENDUNGEN ZUR HERSTELLUNG VON BRAUSEGETRÄNKEN NACH DEM HERKÖMMLICHEN VERFAHREN
STIRRING ADJUVANT AND USES FOR THE PRODUCTION OF EFFERVESCENT BEVERAGES ACCORDING TO THE CONVENTIONAL METHOD

(30) Priorité: 03.02.2017 FR 1750947
(43) Date de publication de la demande: 11.12.2019
(73) Titulaire: DANSTAR FERMENT AG, 6300 Zug (CH)
(72) Inventeur: ROBILLARD, Bertrand, 51200 Epernay (FR); BARBIER, Jacques-Emmanuel, 51350 Cormontreuil (FR); SIECZKOWSKI, Nathalie, 31702 Blagnac (FR); DENONCOURT, Patrick, Mercier, Québec J6R 0G2 (CA); DEGRE, Richard, St-Bruno, Québec J3V 3X3 (CA); WARDROP, Forbes Robert, deceased (FR)
(74) Mandataire: J A Kemp LLP
(86) Numéro de dépôt international: PCT/IB2018/050670
(87) Numéro de publication internationale: WO 2018/142341

(56) Documents cités:
- WO-A1-2015/162573
- FR-A1- 2 398 112
- FR-A5- 2 031 961
- RU-C1- 2 550 260
- RU-C1- 2 588 669

## Description

### DOMAINE TECHNIQUE DE LA DEMANDE

La présente divulgation concerne un adjuvant de remuage et un stabilisateur de mousse à base de protéines issues de levures et leur utilisation pour la production de boissons effervescentes selon la méthode traditionnelle.

### ÉTAT DE L'ART

La prise de mousse (PdM) en bouteille est une méthode traditionnelle de fermentation des vins en bouteille permettant d'obtenir de façon naturelle leur carbonatation. Cette méthode, (anciennement appelée méthode champenoise) qui permet d'obtenir un vin effervescent consiste à ajouter à un vin de base (ou tranquille) une liqueur dite de tirage, composée de sucre, de levain et d'un adjuvant de remuage. Le sucre de betterave ou de canne, préalablement dissout dans du vin, est ajouté à raison de 20 à 25 g/l selon la pression désirée, soit 5 à 6 kg/cm² (à 13°C) en fin de fermentation, après 35 jours en moyenne à une température d'environ 15°C. Le levain est une culture de levures sélectionnées, préalablement acclimatées au milieu du vin. L'adjuvant, traditionnellement composé de bentonite ou mélange bentonite-alginate, sert à l'alourdissement et à l'entraînement du dépôt de levures lors de l'opération ultérieure de remuage. La méthode traditionnelle impose que la bouteille qui est vendue au client soit la même qui ait servi à cette seconde fermentation en bouteille (le transvasage et la filtration étant interdits). Pour vendre le vin, qui doit être dépourvu de toute impureté physique, il est donc nécessaire d'éliminer le dépôt résiduel qui consiste essentiellement des levures ayant servi à la fermentation. Cette opération d'élimination du dépôt s'opère par une succession de 2 étapes: le remuage puis le dégorgement.

Le remuage est l'opération qui consiste à ramener dans le col de la bouteille le dépôt afin de l'éliminer dans la suite, lors du dégorgement. La bouteille, qui était à plat lors de la prise de mousse, est de plus en plus inclinée en opérant un balancement pour ramener le dépôt dans le col de la bouteille. Ce col contenant le dépôt est ensuite plongé dans une solution cryogénique (à environ -25°C) sur quelques centimètres durant 5 à 8 minutes, ce qui permet de congeler le dépôt. La bouteille est retournée puis décapsulée. Sous l'effet de la pression, les sédiments congelés du dépôt sont expulsés et le vin peut être dosé (addition de liqueur sucrée) et la bouteille rebouchée.

En sortie de dégorgement, les vins issus de méthode traditionnelle doivent être sans aucune présence de trouble, ni particule. Cette qualité peut être quantifiée par turbidimétrie. Elle est en générale inférieure à 1unité de turbidité néphélométrique et plus souvent proche de 0,5 ou 0,7 unité de turbidité néphélométrique pour certaines maisons de Champagne.

Il n'est pas possible obtenir un remuage correct, en termes de vitesse de glissement des sédiments dans le col ou de qualité de turbidité, sans l'utilisation d'un adjuvant de remuage. L'oubli de cet aide technologique se traduit, lorsque l'élaborateur s'en rend compte, par la remise en cercle des bouteilles, c'est-à-dire ouverture des bouteilles et vidage du vin en cuve pour recycler le produit lors d'une prochaine opération de PdM. Outre l'impossibilité de rassembler les sédiments dans le col de la bouteille, l'absence d'adjuvant de remuage laisse des « masques » sur le corps de la bouteille. Ces masques sont dus à la présence de levures qui adhèrent à la paroi interne de la bouteille. L'adjuvant de remuage doit donc posséder une forte propension d'adhésion avec les levures et rendre le dépôt cohérent pour qu'aucune levure ne puisse adhérer à la paroi interne de la bouteille.

Les deux principaux adjuvants de remuage que l'on retrouve sur le marché œnologique sont de deux types: de la bentonite pure de type sodique activée et un mélange de bentonite et d'alginate de potassium. L'utilisation de l'alginate est décrite pour donner des résultats de remuage supérieur à la bentonite seule quand les utilisateurs souhaitent des remuages rapides, c'est-à-dire inférieurs à 5 jours. En règle générale, le remuage est réalisé à température de la cave, notamment entre 12 et 18°C, pendant environ 3 à 7 jours.

Parmi les problèmes majeurs des adjuvants de remuage actuels, on retrouve des soucis d'homogénéité des bentonites d'un lot à l'autre. Ces argiles sont extraits de carrière, et malgré les procédés d'activation, on peut noter des comportements de tassement ou de gonflement différents d'un lot à lot provenant d'un même fournisseur; la bentonite ou le mélange bentonite/alginate acheté sous forme de poudre doit nécessairement être réhydratée durant plusieurs heures avant son incorporation dans le réservoir de mixage qui est constitué du vin de base à tirer, des levures et du sucre; les adjuvants de remuage à base de bentonite sont de plus en plus décriés en raison de leur potentialité à céder au vin divers éléments comme les métaux lourds, le fer mais aussi l'aluminium qui est décrit, par certains auteurs, comme potentiellement responsable de maladies chroniques telle que la maladie d'Alzheimer. Ces faits poussent bon nombre d'élaborateurs de vin à se tourner vers des alternatives plus naturelles et sans risque pour la santé humaine i.e. non-allergéniques, d'origine non-animale et non-synthétique.

D'un autre côté, les protéines présentes dans les vins effervescents sont décrites pour participer de manière très positive à la qualité de la mousse. Or, les bentonites sont connues pour interagir avec les protéines et peuvent donc agir négativement sur ce critère de qualité.

En dépit des documents de l'état de l'art RU2550260 C1, WO2015/162573 A1, et FR2031961 A5, il existe donc un réel besoin pour un adjuvant de remuage pour la fermentation en bouteille (seconde fermentation) offrant les mêmes avantages techniques que les adjuvants de remuage à base de bentonite, mais ne présentent pas leurs inconvénients.

### SOMMAIRE DE LA DIVULGATION

La présente divulgation concerne un adjuvant de remuage à base de protéines issues de levures. L'adjuvant de remuage possède une teneur en protéines allant de 30 à 80% par rapport au poids total de l'adjuvant de remuage. Les protéines ayant un poids moléculaire supérieur à 15 KDa de l'adjuvant de remuage représentent au moins 35% de la teneur en protéines par rapport au poids total des protéines de l'adjuvant de remuage. L'agent de remuage peut être sous forme solide ou mis en solution (par exemple en solution aqueuse). L'adjuvant de de remuage en solution peut avoir une concentration d'au moins 5 g/L, 10 g/L, 15 g/L, 20 g/L, 25 g/L, 30 g/L, 35 g/L, 40 g/L, 45 g/L ou 50 g/L. L'adjuvant de remuage en solution peut avoir une concentration allant de 5 g/L à 50 g/L. L'adjuvant de remuage possède une teneur en acides nucléiques de moins de 10% par rapport au poids total de l'agent de remuage. L'adjuvant de remuage possède une teneur en acides aminés libres allant de 10% à 20% par rapport au poids total de l'adjuvant de remuage. L'adjuvant de remuage est utilisée pour la production des boissons effervescentes (par exemple, les boissons effervescentes ayant une turbidité de moins de 1.5 NTU). Les propriétés de remuage de l'adjuvant de remuage peuvent être résistantes aux protéases présentes dans les boissons effervescentes. L'adjuvant de remuage peut être utilisée en combinaison avec de la bentonite, un mélange bentonite-alginate, de l'alginate, du kaolin, des levures inactivées, des écorces de levures, des sels d'ammonium, des tanins, du sulfate de cuivre, de la levure sèche active, du thiamine, du phosphate diammonique ou des mélanges de ceux-ci.

La présente divulgation concerne aussi une liqueur de tirage comprenant un sucre, un levain et un adjuvant de remuage tel que défini dans la présente divulgation.

La présente divulgation concerne également un procédé de production de boissons effervescentes selon la méthode traditionnelle caractérisé en ce que le procédé comprend l'ajout d'un adjuvant de remuage tel que défini précédemment ou une liqueur de tirage tel que défini dans la précédemment à une boisson de base. La méthode traditionnelle comprend une première fermentation et une seconde fermentation et ces deux fermentations doivent être complétées dans le même contenant comprenant la boisson de base (c.-à-d. dans la même bouteille). Les boissons effervescentes produites par la méthode traditionnelle peuvent être des vins, des bières ou des cidres. L'agent de remuage peut être présent dans la boisson à une concentration d'au moins 20 mg/L.

La présente divulgation concerne aussi l'utilisation d'un adjuvant de remuage tel que défini dans la présente divulgation pour la production de boissons effervescentes selon une méthode traditionnelle. Tel qu'indiqué plus haut, la méthode traditionnelle comprend une première fermentation et une seconde fermentation et ces deux fermentations doivent être complétées dans le même contenant comprenant la boisson de base (c.-à-d. dans la même bouteille). Les boissons effervescentes produites par la méthode traditionnelle peuvent être des vins, des bières ou des cidres. L'agent de remuage peut être présent dans la boisson à une concentration d'au moins 20 mg/L.

La présente divulgation concerne également stabilisateur de mousse à base de protéines issues de levures. Le stabilisateur de mousse possède une teneur en protéines allant de 30 à 80% par rapport au poids total du stabilisateur de mousse. Les protéines ayant un poids moléculaire supérieur à 15 KDa du stabilisateur de mousse représentent au moins 35% de la teneur en protéines par rapport au poids total des protéines du stabilisateur de mousse. Le stabilisateur de mousse peut être sous forme solide ou mis en solution (par exemple en solution aqueuse). Le stabilisateur de mousse en solution peut avoir une concentration d'au moins 5 g/L, 10 g/L, 15 g/L, 20 g/L, 25 g/L, 30 g/L, 35 g/L, 40 g/L, 45 g/L ou 50 g/L. Le stabilisateur de mousse en solution peut avoir une concentration allant de 5 g/L à 50 g/L. Le stabilisateur de mousse possède une teneur en acides nucléiques de moins de 10% par rapport au poids total du stabilisateur de mousse. Le stabilisateur de mousse possède une teneur en acides aminés libres allant de 10% à 20% par rapport au poids total du stabilisateur de mousse. Le stabilisateur de mousse peut être utilisé pour stabiliser les protéines des vins potentiellement instables durant le processus de prise de mousse et/ou durant le vieillissement des vins. Le stabilisateur de mousse est utilisé pour la production des boissons effervescentes (par exemple, pour la production de boissons effervescentes ayant une turbidité de moins de 1.5 NTU). Les propriétés de stabilisation du stabilisateur de mousse peuvent être résistantes aux protéases présentes dans les boissons effervescentes. Le stabilisateur de mousse peut être utilisé en combinaison avec de la bentonite, un mélange bentonite-alginate, de l'alginate, du kaolin, des levures inactivées, des écorces de levures, des sels d'ammonium, des tanins, du sulfate de cuivre, de la levure sèche active, du thiamine, du phosphate diammonique ou des mélanges de ceux-ci.

La présente divulgation concerne aussi un procédé de production de boissons effervescentes selon la méthode traditionnelle comprenant l'ajout d'un stabilisateur de mousse tel que défini dans la présente divulgation à une boisson de base. La méthode traditionnelle comprend une première fermentation et une seconde fermentation et ces deux fermentations doivent être complétées dans le même contenant comprenant la boisson de base (c.-à-d. dans la même bouteille). Les boissons effervescentes produites par la méthode traditionnelle peuvent être des vins, des bières ou des cidres. Le stabilisateur de mousse peut être présent dans la boisson à une concentration d'au moins 20 mg/L.

La présente divulgation concerne également l'utilisation d'un stabilisateur de mousse tel que défini dans présente divulgation pour la production de boissons effervescentes selon la méthode traditionnelle. Tel qu'indiqué plus haut, la méthode traditionnelle comprend une première fermentation et une seconde fermentation et ces deux fermentations doivent être complétées dans le même contenant comprenant la boisson de base (c.-à-d. dans la même bouteille). Les boissons effervescentes produites par la méthode traditionnelle peuvent être des vins, des bières ou des cidres. Le stabilisateur de mousse peut être présent dans la boisson à une concentration d'au moins 20 mg/L.

La présente divulgation concerne aussi un boisson effervescente comprenant un agent de remuage tel que défini dans la présente divulgation et/ou un stabilisateur de mousse tel que défini dans la présente divulgation.

### FIGURES

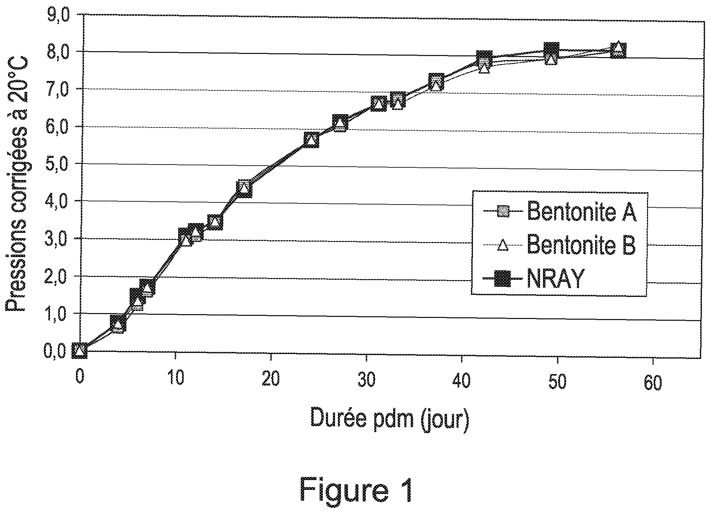

La **Figure 1** décrit le suivi des cinétiques de prise de mousse d'un vin contenant l'adjuvant de remuage de la présente divulgation (NRA Y **▪**) par rapport à deux adjuvants classiques à base de bentonite (bentonite A ▪ et bentonite B △). Les mesures de pression corrigées à 20°C sont présentées en fonction de l'adjuvant utilisé et de la durée de prise de mousse (en jours).

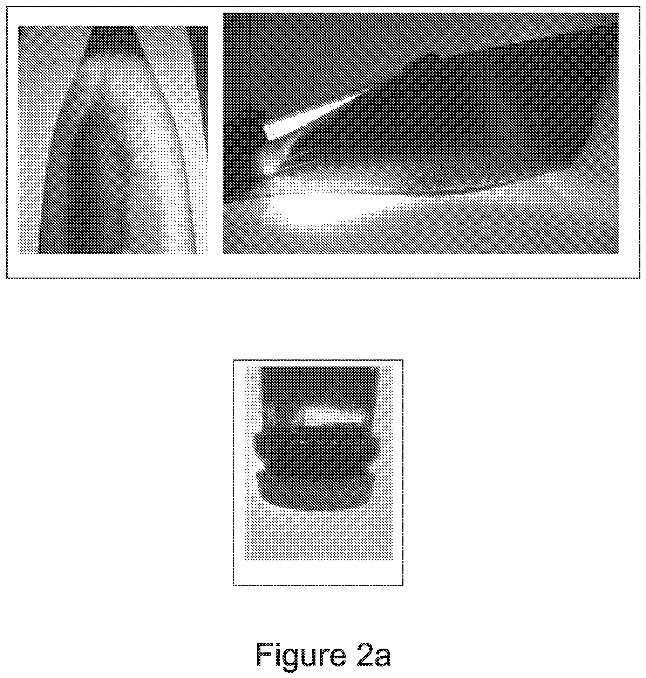

La **Figure 2A** décrit le comportement d'un vin blanc avec la bentonite A lors du remuage à un dosage voisinant 50 mg/L.

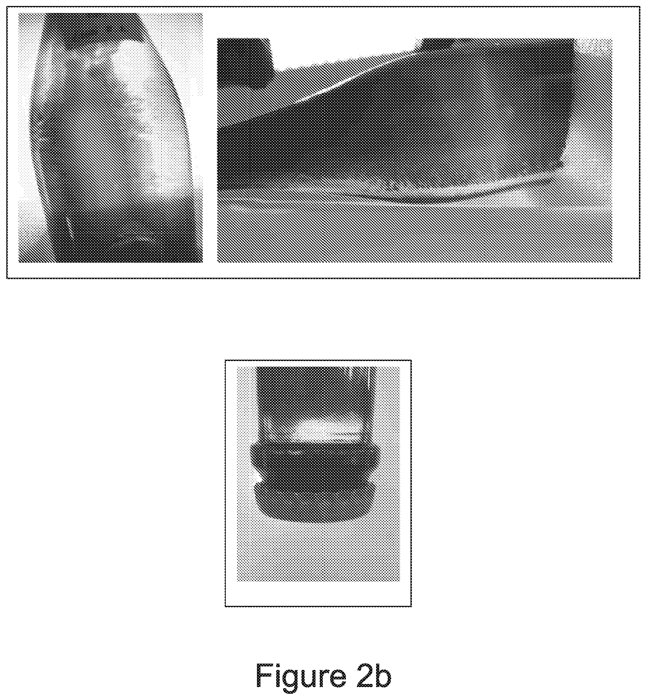

La **Figure 2B** décrit le comportement d'un vin blanc avec la bentonite B lors du remuage à un dosage voisinant 50 mg/L.

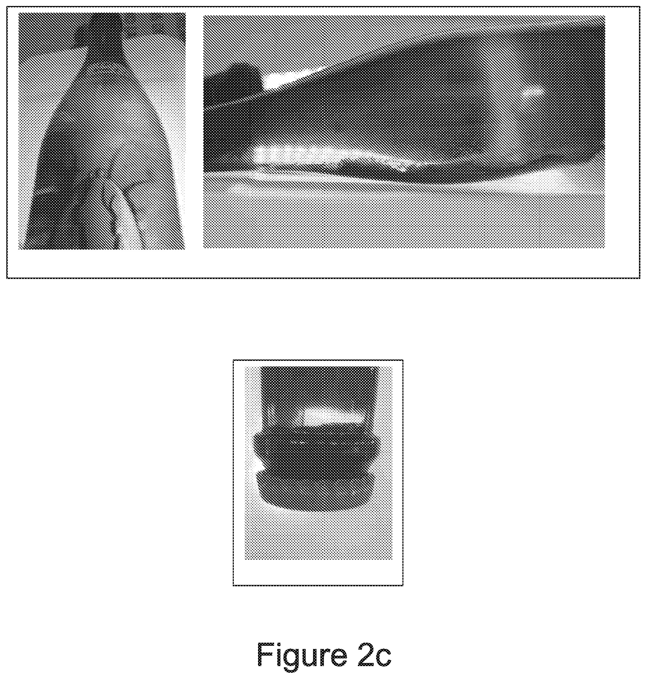

La **Figure 2C** décrit le comportement d'un vin blanc avec l'adjuvant de remuage selon la présente divulgation lors du remuage a un dosage voisinant 80 mg/L.

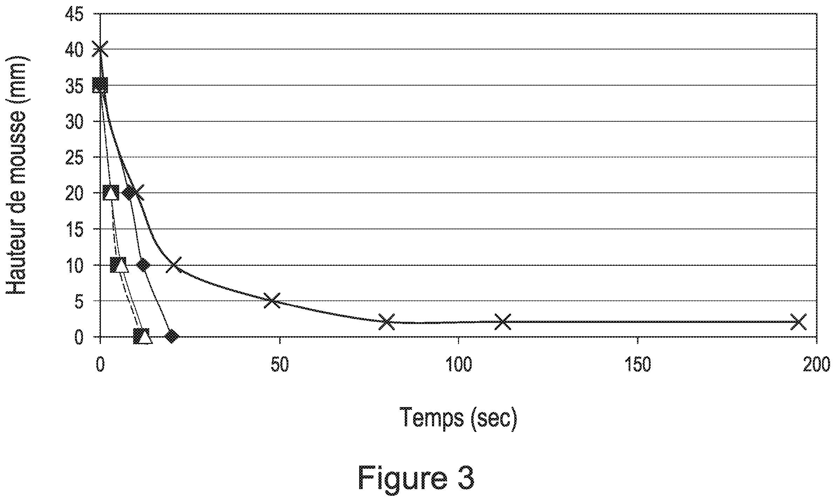

La **Figure 3** décrit l'effet de deux adjuvants de remuage à base de bentonite (A △, B **▪)** ou d'adjuvant objet de la divulgation (C - les croix) sur la stabilité de la mousse d'un vin de base champenois (Tem ◆). Les hauteurs en prise de mousse (mesurées en mm) sont présentées en fonction de l'adjuvant utilisé et du temps (mesuré en seconde).

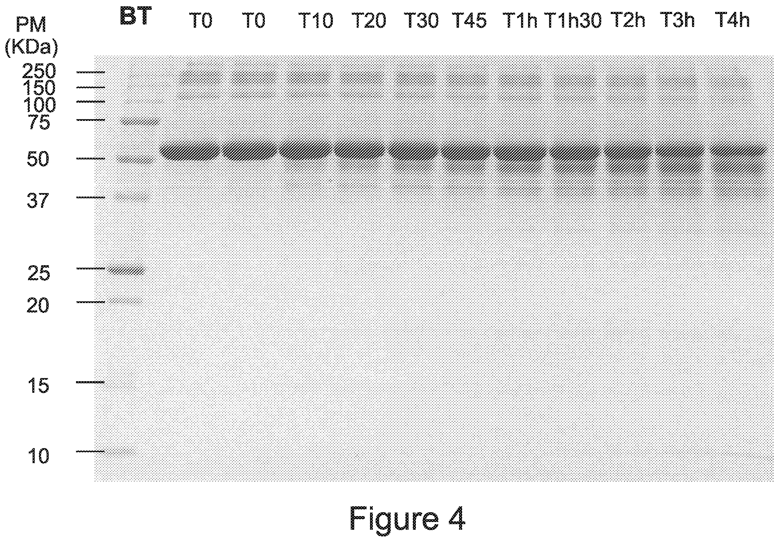

La **Figure 4** présente un gel d'acrylamide dans lequel la présence de protéines a été révélée à l'aide du bleu de Coomassie. Une échelle de poids moléculaire (PM) est présentée dans la première colonne et les poids de cette échelle sont indiqués à la gauche du gel. Des échantillons de vin supplémenté en BSA et incubé pour un maximum de 4 heures ont été déposés dans les différences colonnes du gel. Les résultats sont présentés en fonction du temps d'incubation avec la BSA (T0 = 0 min, T10 = 10 min, T20 = 20 min, T30 = 30 min, T45 = 45 min, T1h = 1 heure, T1h30 = 90 min, T2h = 120 min, T3h = 180 min, T4 = 240 min).

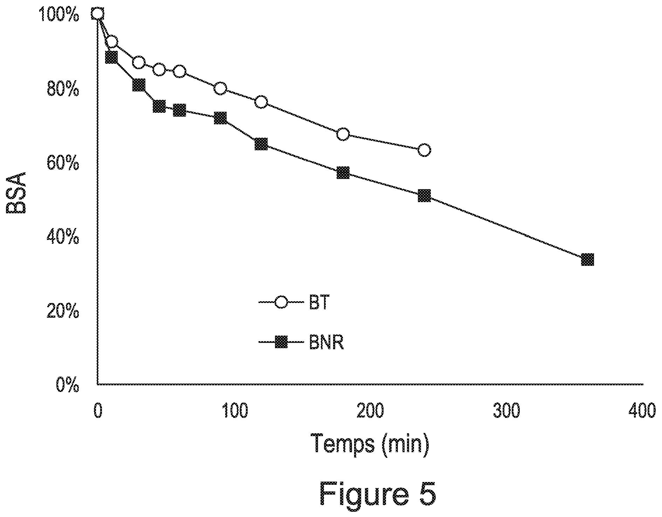

La **Figure 5** présente les résultats de densitométrie de l'hydrolyse de la BSA dans des vins où l'on a ajouté l'agent de remuage de la présente divulgation (BNR **▪)** ou de la bentonite (BT ∘). Les résultats sont présentés comme étant le pourcentage de la BSA hydrolysée en fonction du temps d'incubation (en minutes) et de l'agent de remuage utilisé.

### DESCRIPTION

La présente divulgation consiste à substituer les adjuvants de remuage conventionnels (bentonite ou mélange bentonite/alginate) par un adjuvant de remuage à base de protéines issues de levures. L'adjuvant de remuage selon la présente divulgation est, à l'opposé des adjuvants de remuage classiques, 100% d'origine biologique et non-animale; il est qualifié non-allergène et ne contient aucun produit d'origine minérale. L'adjuvant de remuage de la présente divulgation peut exclusivement contenir des protéines issues de levures.

Avantageusement, l'adjuvant de remuage à base de protéines selon la présente divulgation permet la mise en œuvre pour des prises de mousse (PdM) sur des boissons effervescentes tels que la bière, le cidre ou encore le vin. Plus particulièrement pour le vin, l'adjuvant de remuage à base de protéines selon la présente divulgation permet la mise en œuvre pour des Prises de Mousse (PdM) sur des vins de base blancs, rosés ou rouges.

De manière avantageuse, la durée de la prise de mousse n'est pas modifiée par la présence de l'adjuvant de remuage selon la présente divulgation comparée aux prises de mousse utilisant les adjuvants de remuage classiques à base de bentonite ou du complexe alginate/bentonite.

Avantageusement, le remuage avec l'adjuvant de remuage à base de protéines selon la présente divulgation peut être réalisé dès la fin de la prise de mousse ou plusieurs années après le tirage sans qu'aucune modification du comportement de remuage ne soit observée. Les programmations de remuage sont similaires à celles appliquées aux adjuvants classiques. De manière avantageuse, l'adjuvant de remuage selon la présente divulgation peut participer à l'accroissement de la stabilisation protéique de vins potentiellement instables *ab initio* durant le processus de prise de mousse et tout au long du vieillissement du vin. L'adjuvant de remuage peut donc être utilisé comme un stabilisateur de mousse.

Avantageusement, l'adjuvant de remuage selon la présente divulgation participe à une meilleure qualité de mousse par la présence intrinsèque de protéine et le fait qu'il ne contienne pas de bentonite. Par conséquent, l'adjuvant de remuage peut être utilisé en tant que stabilisateur de mousse.

La présente divulgation concerne un adjuvant de remuage à base de protéines issues de levures qui possède une teneur en protéines totales allant de 30 à 80% par rapport au poids total de l'adjuvant de remuage; une teneur en protéines totales allant de 35 à 75% par rapport au poids total de l'adjuvant de remuage; une teneur en protéines totales allant de 40 à 70% par rapport au poids total de l'adjuvant de remuage; une teneur en protéines totales allant de 40 à 65% par rapport au poids total de l'adjuvant de remuage; une teneur en protéines totales allant de 40 à 60% par rapport au poids total de l'adjuvant de remuage; une teneur en protéines totales allant de 40 à 55% par rapport au poids total de l'adjuvant de remuage et/ou une teneur en protéines totales allant de 45 à 55% par rapport au poids total de l'adjuvant de remuage.

Dans l'adjuvant de remuage, les protéines ayant un poids moléculaire supérieur à 15 KDa représentent au moins 35%, au moins 40%, au moins 45% au moins 50%, au moins 55%, au moins 60%, au moins 65% ou au moins 70% de la teneur en protéines totales de l'ajuvant de remuage. La teneur en protéine totale peut être mesurée par différents moyens connus de la personne du métier mais elle est déterminée de préférence par la méthode de Lowry. Cette détermination peut être accomplie par différents moyens connus de la personne du métier, préférablement par densitométrie après électrophorèse SDS-PAGE et coloration au bleu de Coomassie.

L'adjuvant de remuage à base de protéines selon la présente divulgation possède une teneur en acides aminés libre allant de 10% à 20% par rapport au poids total de l'adjuvant de remuage. Encore une fois, la teneur en acides aminés libres peut être accomplie par différents moyens connus de la personne du métier.

L'adjuvant de remuage à base de protéines selon la présente divulgation possède également une teneur en acides nucléiques de moins de 10% poids, moins de 9% poids, moins de 8% poids, moins de 7% poids, moins de 6% poids, moins de 5% poids par rapport au poids total de l'adjuvant de remuage.

L'adjuvant de remuage à base de protéines selon la présente divulgation peut être obtenu suivant divers procédés déjà connus de la personne du métier. Cependant, l'adjuvant de remuage selon la présente divulgation peut être obtenu selon les méthodes, par exemple, mais non limité à, l'autolyse classique, la lyse enzymatique, le bris mécanique avec ou sans enzymes, le bris par pression avec ou sans enzymes et/ou l'homogénéisation. Les protéines de l'adjuvant de remuage à base de protéines selon la présente divulgation conservent en tout ou en partie leur activité enzymatique d'origine. Préférentiellement, les protéines sont issues de lyses de levures.

L'adjuvant de remuage selon la présente divulgation peut se présenter sous diverses formes. L'adjuvant de remuage selon la présente divulgation se présente avantageusement sous la forme d'une poudre ou d'un liquide plus ou moins concentré. Préférablement, l'adjuvant de remuage selon la présente divulgation se présente sous la forme d'une poudre granulée, soluble dans l'eau. L'adjuvant de remuage selon la présente divulgation peut ainsi être facilement mis en solution quelques minutes avant emploi, au moment de son ajout dans un réservoir qui contient les levures et le sucre, juste avant la mise en bouteille pour la prise de mousse. Ceci est un avantage sur les adjuvants de remuage conventionnels qui, sous forme de poudre, doivent être réhydratés durant plusieurs heures, du fait de leur contenu en bentonite (la bentonite nécessitant une opération de réhydratation avant emploi) ou préalablement préparés dans l'eau.

L'adjuvant de remuage selon la présente divulgation peut être en solution à une concentration d'au moins 5 g/L, 10 g/L, 15 g/L, 20 g/L, 25 g/L, 30 g/L, 35 g/L, 40 g/L, 45 g/L ou 50 g/L. Alternativement, l'adjuvant de remuage selon la présente divulgation peut être en solution à une concentration allant de 5 g/L à 50 g/L g/L. Préférablement, l'agent de remuage est en solution à une concentration de voisinant 20 g/L.

L'adjuvant de remuage selon la présente divulgation peut également se présenter sous la forme d'une poudre granulées ou de comprimés autodispersibles.

Les levures utilisées pour obtenir les protéines utilisées comme agent de remuage ou stabilisateur de mousse peuvent provenir de toutes les espèces de levures, en particulier des levures du genre genre *Saccharomyces, Hanseniaspora, Hansenula, Kluyveromyces, Metschnikowia, Pichia, Starmerella, Torulaspora* ou un mélange de ces levures. Selon un mode de réalisation préféré, les levures utilisées selon la présente divulgation proviennent du genre *Saccharomyces.* Avantageusement, les levures utilisées sont de l'espèce *Saccharomyces cerevisiae.* Selon un autre mode de réalisation, les levures utilisées selon la présente peuvent provenir d'un mélange de deux ou plus de deux espèces de *Saccharomyces cerevisiae.*

L'adjuvant de remuage selon la présente divulgation permet la production de boissons effervescentes avec une turbidité de moins de 1.5 NTU, moins de 1.4 NTU, moins de 1.3 NTU, moins de 1.2 NTU, moins de 1.1 NTU, moins de 1.0 NTU, moins de 0.9 NTU, moins de 0.8 NTU, moins de 0.7 NTU, moins de 0,6 NTU ou moins de 0.5 NTU.

L'adjuvant de remuage à base de protéines selon la présente divulgation peut être utilisé seul ou en combinaison avec au moins un adjuvant classique, tel que, par exemple, la bentonite, un mélange bentonite- alginate, l'alginate, le kaolin, les levures inactivés, les écorces de levures, des sels d'ammonium, des tanins (tanin de noix de galles ou des tanins de châtaigner), du sulfate de cuivre, de la levure sèche active, du thiamine, du phosphate diammonique ou des mélanges de ceux-ci.

La présente divulgation concerne également un procédé de production de boissons effervescentes selon la méthode traditionnelle caractérisé en ce que le procédé comprend l'ajout d'un adjuvant de remuage et/ou un stabilisateur de mousse tel que défini précédemment à une boisson de base. L'expression «boisson de base » ou boisson tranquille est définie comme des boissons qui ne forment pas de bulles lors de l'ouverture de la bouteille. La méthode traditionnelle comporte deux fermentations (c.-à-d. une première fermentation et une seconde fermentation) dans un seul et même contenant (c.-à-d. dans une seule et même bouteille). Les boissons effervescentes produites selon le procédé de la présente divulgation peuvent être des vins, des bières ou des cidres. Les vins sont préférablement des vins de base blancs, rosés ou rouges.

La méthode traditionnelle de production de boissons effervescentes peut comprendre l'ajout de l'adjuvant de remuage à la boisson de base via l'addition d'une liqueur de tirage. La liqueur de tirage comprend un sucre, un levain et un adjuvant de remuage tel que défini précédemment. La méthode comprend une première étape de remuage qui consiste à ramener dans le col de la bouteille le dépôt afin de l'éliminer dans la suite, lors du dégorgement. La bouteille, qui était à plat lors de la prise de mousse, est de plus en plus inclinée en opérant un balancement pour ramener le dépôt dans le col de la bouteille. Le col contenant le dépôt peut ensuite être plongé dans une solution cryogénique (à environ-25°C) sur quelques centimètres durant 5 à 8 minutes pour permettre de congeler le dépôt. La méthode comporte également le dégorgement, lorsque la bouteille est retournée puis ensuite décapsuler; sous l'effet de la pression, les sédiments congelés du dépôt sont expulsés et la boisson peut être dosée au besoin (addition de liqueur sucrée) et la bouteille rebouchée.

L'ajout de l'adjuvant de remuage selon le procédé décrit précédemment peut se fait à une concentration d'au moins 20 mg/L, 25 mg/L, 30 mg/L, 35 mg/L, 40 mg/L, 45 mg/L, 50 mg/L, 55 mg/L, 60 mg/L, 65 mg/L, 70 mg/L, 75 mg/L, 80 mg/L, 85 mg/L, 90 mg/L, 95 mg/L, 100 mg/L, 105 mg/L, 110 mg/L, 115 mg/L, 120 mg/L, 125 mg/L, 130 mg/L, 135 mg/L, 140 mg/L, 145 mg/L, 150 mg/L, 155 mg/L, 160 mg/L, 165 mg/L, 170 mg/L, 175 mg/L, 180 mg/L, 185 mg/L, 190 mg/L, 195 mg/L ou 200 mg/L de la boisson.

Alternativement, l'ajout de l'adjuvant de remuage selon le procédé décrit précédemment se fait à une concentration allant de 20 à 250 mg/L et plus particulièrement entre 30 et 150 mg/L ou encore 30 à 100 mg/L selon les type de boissons effervescentes, leur facilité à remuer et le contenu en levures présentes en fin de prise de mousse.

Les boissons effervescentes produites selon le procédé de la présente description peuvent avoir une turbidité de moins de 1.5 NTU, moins de 1.4 NTU, moins de 1.3 NTU, moins de 1.2 NTU, moins de 1.1 NTU, moins de 1.0 NTU, moins de 0.9 NTU, moins de 0.8NTU, moins de 0.7NTU, moins de 0,6NTU ou moins de 0.5NTU.

L'adjuvant de remuage à base de protéines et le stabilisateur de mousse selon la présente divulgation peut être utilisé seul ou en combinaison avec au moins un adjuvant classique, tel que, par exemple, la bentonite, un mélange bentonite- alginate, l'alginate, le kaolin, les levures inactivés, les écorces de levures, des sels d'ammonium, des tanins (tanin de noix de galles ou des tanins de châtaigner), du sulfate de cuivre, de la levure sèche active, du thiamine, du phosphate diammonique ou des mélanges de ceux-ci.

### EXEMPLE

*Préparation de l'adjuvant de remuage selon la présente divulgation.* L'adjuvant de remuage selon la présente divulgation a été obtenu selon les méthodes connues de l'homme du métier, par exemple, mais non limité à l'autolyse classique, la lyse enzymatique, le bris mécanique avec ou sans enzymes, le bris par pression avec ou sans enzymes, l'homogénéisation.

Les adjuvants de remuage selon la présente divulgation obtenu ont été analysés selon les méthodes connues de la personne du métier et possèdent les caractéristiques suivantes: une teneur en protéines allant de 45 à 55% par rapport au poids total de l'adjuvant de remuage déterminée par la méthode de Lowry; une teneur en protéines ayant un poids moléculaire supérieur à 15 KDa d'au moins 35% de la teneur en protéine et déterminé par densitométrie après électrophorèse SDS-PAGE et coloration au bleu de Coomassie; une teneur en acides nucléiques de 4% par rapport au poids total de l'agent de remuage et une teneur en acides aminés libres de 10% à 20% par rapport au poids total de l'adjuvant de remuage.

L'adjuvant de remuage selon la présente divulgation est sous forme d'une poudre granulée qui a été dissoute dans de l'eau brute à une température entre 15 et 20°C sous vive agitation de façon à éviter la formation de grumeaux. La concentration d'adjuvant de remuage en solution est d'environ 5 à 50 g/L, préférablement voisine de 20 g/L.

*Préparation du clarifiant A (adjuvant de remuage classique).* Aucune préparation particulière n'a été nécessaire puisqu'il s'agit de bentonite préalablement mise en suspension dans l'eau à une concentration voisine de 50 g/L.

*Préparation du clarifiant B (adjuvant de remuage classique).* Cette modalité est similaire à la préparation du clarifiant A. La différence est que cette bentonite est une alternative particulièrement recommandée par des élaborateurs de méthode traditionnelle. La préparation a été effectuée selon les recommandations du fournisseur i.e. un gonflement dans de l'eau brute la veille à température ambiante et à une concentration finale de 50 g/L avant dilution dans le vin.

*Préparation de la mixtion pour tirage en prise de mousse.* La mixtion est le mélange contenant le vin de base qui a été stabilisé au regard des cristallisations tartriques et préfiltré sur terre de diatomées puis filtre plaque de façon à obtenir une turbidité voisine ou inférieure à 1 NTU. Les données sur le vin de base sont visibles dans le tableau 1. À ce vin de base a été ajouté une liqueur composée de ce même vin et de sucre; ce mélange avait une concentration initiale de 650 g/L de saccharose. La concentration finale de sucre dans la mixtion a été calculée pour qu'elle soit comprise entre 23 et 25 g/L après ajout de l'ensemble des composants. À ce mélange, des levures ré-acclimatées ont été ajouté selon le protocole classique de préparation de levain pour la méthode traditionnelle champenoise. Au moment de la préparation, l'activité des levures était voisine de 90% et leur quantité étaient telle qu'en fin de mixtion, leur concentration oscillait entre 1,5 et 2 cellules/mL. Le vin était à 14°C +/-1°C au moment de la préparation.

À ce mélange et pour terminer la mixtion, a été ajouté sous agitation, la quantité d'adjuvant A ou B à hauteur de 50 mg/L, ou la quantité de l'adjuvant de remuage selon la présente divulgation qu'il suffit pour une teneur au moment du tirage voisine de 50 mg/L.

Les tirages ont été réalisés en bouteille dites champenoises tout en maintenant sous agitation la mixtion.

Après capsulage, les bouteilles ont été stockées sur lattes à 13°C. Le suivi de la cinétique de la prise de mousse est visible sur la Figure 1 par mesure de la pression à l'aide d'un aphromètre. Après 6 semaines, les trois modalités avaient été mises à remuer sur un même équipement (Gyroflex^{®}) garantissant un remuage identique pour les trois types de tirage. Le programme de remuage a été effectué sur 5 jours.

Après remuage, trois bouteilles de chacune des trois modalités ont été dégorgées sur bac à glace (formation du glaçon à -25°C) et la turbidité a été mesurée par néphélométrie après dégazage des vins à l'abri de toute pollution particulaire.

Le suivi des cinétiques de prise de mousse (Figure 1) montre que l'adjuvant de remuage selon la présente divulgation présente des performances similaire par rapport au deux adjuvants classiques à base de bentonite. Ce résultat est classique, il n'est que très rarement décrit que les adjuvants de remuage puissent modifier le comportement des Prises de Mousse (PdM). Les seuls cas signalés concernent des retards, voire des arrêts, de Prises de Mousse dus à la présence de dioxyde de soufre (SO₂), utilisés comme antioxydant et agent antimicrobiens, dans les adjuvants de remuage ou en excès dans le vin à tirer; ou un excès de gaz carbonique au moment du tirage ou enfin une présence trop importante de produits phytosanitaires dans le vin initial. Dans les trois modalités ci-haut, inclus l'adjuvant de remuage selon la présente divulgation, les préparations ne contiennent pas de SO₂. Il semble donc l'adjuvant de remuage de la présente divulgation fonctionne de façon similaire par rapport au deux adjuvants classiques à base de bentonite sans les désavantages de ceux-ci.

*Comportement lors du remuage.* Des photos montrant le comportement des trois modalités sur lattes sont visibles sur les figures 2A (Bentonite A), 2B (bentonite B) et 2C (l'adjuvant de remuage selon la présente divulgation).

*Bentonite A.* Sur l'ensemble des bouteilles observées, on constate pour la Figure 2A, on remarque un aspect relativement diffus des lies; celles-ci sont assez présentes sur toute la moitié du corps de la bouteille. L'aspect est homogène. En manipulant la bouteille, on note des particules légères qui se remettent en suspension. Après remuage, on note la présence de deux légers masques (adhérence sur le verre qui n'a pas été ramassée lors du remuage) sur 2 bouteilles. On note du léger (particules très fines et de masse volumique proche de celle du vin en suspension dans le liquide) au-dessus du dépôt (non-visible sur la figure).

*Bentonite B.* Les observations sont similaires aux précédentes (bentonite A), il y a cependant moins de léger et les lies sont plus rassemblées dans le corps de la bouteille (Figure 2B) comparativement à l'expérience précédente. Après remuage, les bouteilles sont propres, une seule montre la présence d'un léger masque. Sur pointes (photo du bas), on note très peu de léger en suspension.

*L'adjuvant de remuage selon la présente divulgation.* Sur l'ensemble des bouteilles observées, on constate pour la Figure 2C un aspect beaucoup plus compact des lies. Le dépôt est très cohérent. Très peu, voire aucune matière n'est présente sur le corps de la bouteille. Après remuage, une seule bouteille montre la présence d'une légère adhérence. Sur pointes (photo du bas), on note très peu de léger en suspension.

Le tableau 1 montre sur les trois modalités des turbidités conformes aux normes pour les élaborateurs de vins effervescents (< 1NTU)

| **Modalité** | **Turbidité (NTU) bouteille 1** | **Turbidité (NTU) bouteille 2** | **Turbidité (NTU) bouteille 3** |
|---|---|---|---|
| Bentonite A | 0,40 | 0,48 | 0,34 |
| Bentonite B | 0,15 | 0,25 | 0,22 |
| NRAY | 0,21 | 0,18 | 0,25 |

La qualité de mousse a été quantifiée par une technique d'effervescence maîtrisée nommée Mosalux^{®} (L. Viaux, C. Morard, B. Robillard, B. Duteurtre, 1994. The Impact of Base Wine Filtration on Champagne Foam Behavior. Am. J. Enol. Vitic,, 45: 407-409. / M. Gallart, E. Lopez-Tamames, S. Buxaderas, 1997. Foam Measurements in Wines: Comparison of Parameters Obtained by Gas Sparging Method. J. Agric. Food Chem., 45(12), 200-204).

Dans un vin d'assemblage champenois (prêt au tirage), des quantités identiques (80 mg/L) des deux bentonites référencées ci-dessus A et B préalablement réhydratées ont été rajoutés, de même que l'adjuvant de remuage selon la présente divulgation. Après avoir agité durant une journée à environ 13°C, les vins ont été isolés de leurs lies par filtration 5 µm et la stabilité de leurs mousses dans le temps a été mesurée par le Mosalux^{®}.

Les résultats rassemblés sur la Figure 3 montrent, dans les conditions expérimentales utilisées, la hauteur de mousse (mm) en fonction du temps. On constate que le vin témoin (Tem - losanges) n'ayant reçu aucun adjuvant ainsi que les vins suppléments en adjuvants à base de bentonite (A - triangles, B - carrés) révèlent une stabilité de mousse bien inférieure au vin supplémenté par l'adjuvant de remuage de la présente divulgation (C - croix).

*Effets des protéases.* Il a été ensuite déterminé si l'hydrolyse potentielle de l'adjuvant de remuage de la présente divulgation (NRAY) dans le temps et dans des vins montrant une activité protéasique s'il y avait une perte potentielle de son activité de remuage. Un tirage dans un vin blanc et avec une dose de NRAY à 80 mg/L (NR) et un témoin (T) contenant une dose classique de 30 mg/L de bentonite dédiée au remuage. Ces deux modalités ont été conservées sur lattes de manière habituelle durant deux ans avant de procéder au remuage puis au dégorgement des deux modalités. À cette étape, les turbidités étaient de 0,28 NTU pour la modalité témoin (T) et de = 0,32NTU pour l'agent de remuage de la présente divulgation (NRAY). Dans chacun de ces vins, de l'albumine sérique bovine avait été introduite (BSA: 100 mg/L, la BSA étant une protéine facilement hydrolysable de poids moléculaire voisin de 60K Da) et son hydrolyse potentielle dans le vin dans le temps a été suivi. Cette quantification de l'hydrolyse a été effectuée par le dépôt direct des vins (14 µL) sur un gel d'électrophorèse (technique SDS-PAGE / gel d'acrylamide à 13% / révélation au Coomassie Brillant Blue^{®}) dans le temps. Tel que démontré à la Figure 4, la BSA a été rapidement hydrolysée dans le vin témoin, ce qui démontre la présence de protéases actives dans le vin considéré. L'hydrolyse de la BSA a ensuite été déterminée par densitométrie des gels d'acrylamide. Tel que démontré à la Figure 5, le vin ayant reçu la bentonite (BT) ou celui vin ayant reçu l'adjuvant de remuage de la présente divulgation (BNR), l'hydrolyse de la BSA a été observée. Les différences de pente observées entre l'adjuvant de remuage de la présente divulgation (BNR) et la bentonite (BT) peuvent s'expliquer, en partie, par un collage partiel des activités protéasiques par la bentonite. À partir de ces données obtenus dans un vin de champagne, malgré la présence d'activité protéasique et après 2 ans de vieillissement, il est conclu que l'adjuvant de la présente divulgation (NRAY) demeure efficace comme colle de remuage puisque les turbidités étaient tout à fait adéquates (0,32 NTU). De plus, l'adjuvant de la présente divulgation (NRAY) semble peu ou pas sensible à l'hydrolyse par des activités protéasiques intrinsèques au vin ou, s'il est en partie hydrolysé, ceci n'affecte en rien ses propriétés d'agent de remuage.

## Revendications

1. Un adjuvant de remuage à base de protéines issues de levures, **caractérisé en ce que**:
l'adjuvant de remuage possède une teneur en protéines allant de 30 à 80% par rapport au poids total de l'adjuvant de remuage;
les protéines ayant un poids moléculaire supérieur à 15 KDa représentent au moins 35% de la teneur en protéines par rapport au poids total des protéines de l'adjuvant de remuage;
l'adjuvant de remuage possède une teneur en acides nucléiques de moins de 10% par rapport au poids total de l'agent de remuage; et
l'adjuvant de remuage possède une teneur en acides aminés libres allant de 10% à 20% par rapport au poids total de l'adjuvant de remuage.

2. L'adjuvant de remuage selon la revendication 1, **caractérisé en ce que**:
l'adjuvant de remuage est sous forme solide ou mis en solution;
l'adjuvant de remuage est en solution aqueuse;
l'adjuvant de remuage est en solution à une concentration d'au moins 5 g/L, 10 g/L, 15 g/L, 20 g/L, 25 g/L, 30 g/L, 35 g/L, 40 g/L, 45 g/L ou 50 g/L;
l'adjuvant de remuage est en solution à une concentration allant de 5 g/L à 50 g/L; et/ou
l'adjuvant de remuage est pour la production des boissons effervescentes.

3. L'adjuvant de remuage selon la revendication 1 ou 2, **caractérisé en ce qu'**il est en combinaison avec de la bentonite, un mélange bentonite-alginate, de l'alginate, du kaolin, des levures inactivées, des écorces de levures, des sels d'ammonium, des tanins, du sulfate de cuivre, de la levure sèche active, du thiamine, du phosphate diammonique ou des mélanges de ceux-ci.

4. Liqueur de tirage **caractérisée en ce qu'**elle comprend un sucre, un levain et un adjuvant de remuage tel que défini aux revendications 1 à 3.

5. Un procédé de production de boissons effervescentes selon une méthode traditionnelle comprenant une première fermentation et une seconde fermentation dans le même contenant, **caractérisé en ce que** le procédé comprend l'ajout d'un adjuvant de remuage tel que défini dans l'une quelconque des revendications 1 à 3 ou une liqueur de tirage de la revendication 4 à une boisson de base dans le contenant.

6. Le procédé selon la revendication 5, **caractérisé en ce que** les boissons effervescentes sont des vins, des bières ou des cidres et/ou l'adjuvant de remuage est présent dans la boisson à une concentration d'au moins 20 mg/L.

7. Utilisation d'un adjuvant de remuage tel que défini dans l'une quelconque des revendications 1 à 3 ou d'une liqueur de tirage défini dans la revendication 4 pour la production de boissons effervescentes selon une méthode traditionnelle comprenant une première fermentation et une seconde fermentation dans le même contenant.

8. L'utilisation selon la revendication 7, **caractérisée en ce que** les boissons effervescentes sont des vins, des bières ou des cidres et/ou l'adjuvant de remuage est présent dans la boisson à une concentration d'au moins 20 mg/L.

9. Un stabilisateur de mousse à base de protéines issues de levures, caractérisé en en ce que :
le stabilisateur de mousse possède une teneur en protéines allant de 30 à 80% par rapport au poids total du stabilisateur de mousse;
les protéines ayant un poids moléculaire supérieur à 15 KDa représentent au moins 35% de la teneur en protéines par rapport au poids total des protéines du stabilisateur de mousse;
le stabilisateur de mousse possède une teneur en acides nucléiques de moins de 10% par rapport au poids total du stabilisateur de mousse; et
le stabilisateur de mousse possède une teneur en acides aminés libres allant de 10% à 20% par rapport au poids total du stabilisateur de mousse.

10. Le stabilisateur de mousse selon la revendication 9, **caractérisé en ce que** :
le stabilisateur de mousse est sous forme solide ou mis en solution;
le stabilisateur de mousse est en solution aqueuse;
le stabilisateur de mousse est en solution à une concentration d'au moins 5 g/L, 10 g/L, 15 g/L, 20 g/L, 25 g/L, 30 g/L, 35 g/L, 40 g/L, 45 g/L ou 50 g/L;
le stabilisateur de mousse est en solution à une concentration allant de 5 g/L à 50 g/L;
le stabilisateur de mousse est pour la production des boissons effervescentes; et/ou
le stabilisateur de mousse est en combinaison avec de la bentonite, un mélange bentonite-alginate, de l'alginate, du kaolin, des levures inactivées, des écorces de levures, des sels d'ammonium, des tanins, du sulfate de cuivre, de la levure sèche active, du thiamine, du phosphate diammonique ou des mélanges de ceux-ci.

11. Un procédé de production de boissons effervescentes selon la méthode traditionnelle comprenant une première fermentation et une second fermentation dans le même contenant, **caractérisé en ce que** le procédé comprend l'ajout d'un stabilisateur de mousse tel que défini dans la revendication 9 ou 10 à une boisson de base dans le contenant.

12. Le procédé selon la revendication 11, **caractérisé en ce que** les boissons effervescentes sont des vins, des bières ou des cidres et/ou le stabilisateur de mousse est présent dans la boisson à une concentration d'au moins 20 mg/L.

13. Utilisation d'un stabilisateur de mousse tel que défini dans la revendication 9 ou 10 pour la production de boissons effervescentes selon la méthode traditionnelle comprenant une première fermentation et une seconde fermentation dans le même content.

14. L'utilisation selon la revendication 13, **caractérisée en ce que** les boissons effervescentes sont des vins, des bières ou des cidres et/ou le stabilisateur de mousse est présent dans la boisson à une concentration d'au moins 20 mg/L.

15. Un boisson effervescente comprenant un agent de remuage tel que défini selon quelconques des revendications 1 à 3 et/ou un stabilisateur de mousse tel que défini selon la revendication 9 ou 10.

## Patentansprüche

1. Rüttelhilfsstoff auf der Basis von Proteinen, die von Hefen stammen, **dadurch gekennzeichnet, dass**:
der Rüttelhilfsstoff einen Proteingehalt von 30 bis 80 % bezogen auf das Gesamtgewicht des Rüttelhilfsstoffs besitzt;
die Proteine mit einem Molekulargewicht von mehr als 15 kDa mindestens 35 % des Proteingehalts bezogen auf das Gesamtgewicht der Proteine des Rüttelhilfsstoffs darstellen;
der Rüttelhilfsstoff einen Nukleinsäuregehalt von weniger als 10 % bezogen auf das Gesamtgewicht des Rüttelhilfsstoffs besitzt; und
der Rüttelhilfsstoff einen Gehalt an freien Aminosäuren von 10 % bis 20 % bezogen auf das Gesamtgewicht des Rüttelhilfsstoffs aufweist.

2. Rüttelhilfsstoff nach Anspruch 1, **dadurch gekennzeichnet, dass**:
der Rüttelhilfsstoff in fester Form oder in Lösung gebracht ist;
der Rüttelhilfsstoff in wässriger Lösung ist;
der Rüttelhilfsstoff in Lösung mit einer Konzentration von mindestens 5 g/l, 10 g/l, 15 g/l, 20 g/l, 25 g/l, 30 g/l, 35 g/l, 40 g/l, 45 g/l oder 50 g/l ist;
der Rüttelhilfsstoff in Lösung mit einer Konzentration von 5 g/l bis 50 g/l ist; und/oder
der Rüttelhilfsstoff für die Herstellung von schäumenden Getränken ist.

3. Rüttelhilfsstoff nach Anspruch 1 oder 2, **dadurch gekennzeichnet, dass** er in Kombination mit Bentonit, einem Bentonit-Alginat-Gemisch, Alginat, Kaolin, inaktivierten Hefen, Hefezellwänden, Ammoniumsalzen, Tanninen, Kupfersulfat, aktiver Trockenhefe, Thiamin, Diammoniumphosphat oder Gemischen davon ist.

4. Fülldosage, **dadurch gekennzeichnet, dass** sie einen Zucker, einen Hefeansatz und einen Rüttelhilfsstoff wie definiert in den Ansprüchen 1 bis 3 umfasst.

5. Verfahren zur Herstellung von schäumenden Getränken gemäß einer traditionellen Methode, umfassend eine erste Gärung und eine zweite Gärung in demselben Behälter, **dadurch gekennzeichnet, dass** das Verfahren das Hinzufügen eines Rüttelhilfsstoffs wie definiert in einem beliebigen der Ansprüche 1 bis 3, oder einer Fülldosage nach Anspruch 4 zu einem Basisgetränk in dem Behälter umfasst.

6. Verfahren nach Anspruch 5, **dadurch gekennzeichnet, dass** die schäumenden Getränke Weine, Biere oder Apfelweine sind und/oder der Rüttelhilfsstoff in einer Konzentration von mindestens 20 mg/l in dem Getränk vorhanden ist.

7. Verwendung eines Rüttelhilfsstoffs, wie definiert in einem beliebigen der Ansprüche 1 bis 3, oder einer Fülldosage wie definiert in Anspruch 4 zur Herstellung von schäumenden Getränken gemäß einer traditionellen Methode, umfassend eine erste Gärung und eine zweite Gärung in demselben Behälter.

8. Verwendung nach Anspruch 7, **dadurch gekennzeichnet, dass** die schäumenden Getränke Weine, Biere oder Apfelweine sind und/oder der Rüttelhilfsstoff in einer Konzentration von mindestens 20 mg/l in dem Getränk vorhanden ist.

9. Schaumstabilisator auf der Basis von Proteinen, die von Hefen stammen, **dadurch gekennzeichnet, dass**:
der Schaumstabilisator einen Proteingehalt von 30 bis 80 % bezogen auf das Gesamtgewicht des Schaumstabilisators besitzt;
die Proteine mit einem Molekulargewicht von mehr als 15 kDa mindestens 35 % des Proteingehalts bezogen auf das Gesamtgewicht der Proteine des Schaumstabilisators darstellen;
der Schaumstabilisator einen Nukleinsäuregehalt von weniger als 10 % bezogen auf das Gesamtgewicht des Schaumstabilisators aufweist; und
der Schaumstabilisator einen Gehalt an freien Aminosäuren von 10 bis 20 % bezogen auf das Gesamtgewicht des Schaumstabilisators besitzt.

10. Schaumstabilisator nach Anspruch 9, **dadurch gekennzeichnet, dass**:
der Schaumstabilisator in fester Form oder in Lösung gebracht ist;
der Schaumstabilisator in wässriger Lösung ist;
der Schaumstabilisator in Lösung mit einer Konzentration von mindestens 5 g/l, 10 g/l, 15 g/l, 20 g/l, 25 g/l, 30 g/l, 35 g/l, 40 g/l, 45 g/l oder 50 g/l ist;
der Schaumstabilisator in Lösung mit einer Konzentration von 5 g/l bis 50 g/l ist;
der Schaumstabilisator für die Herstellung von schäumenden Getränken ist; und/oder
der Schaumstabilisator in Kombination mit Bentonit, einem Bentonit-Alginat-Gemisch, Alginat, Kaolin, inaktivierten Hefen, Hefezellwänden, Ammoniumsalzen, Tanninen, Kupfersulfat, aktiver Trockenhefe, Thiamin, Diammoniumphosphat oder Gemischen davon ist.

11. Verfahren zur Herstellung von schäumenden Getränken gemäß der traditionellen Methode, umfassend eine erste Gärung und eine zweite Gärung in demselben Behälter, **dadurch gekennzeichnet, dass** das Verfahren das Hinzufügen eines Schaumstabilisators wie definiert in Anspruch 9 oder 10 zu einem Basisgetränk in dem Behälter umfasst.

12. Verfahren nach Anspruch 11, **dadurch gekennzeichnet, dass** die schäumenden Getränke Weine, Biere oder Apfelweine sind und/oder der Schaumstabilisator in einer Konzentration von mindestens 20 mg/l in dem Getränk vorhanden ist.

13. Verwendung eines Schaumstabilisators wie definiert in Anspruch 9 oder 10 zur Herstellung von schäumenden Getränken gemäß dem traditionellen Verfahren, umfassend eine erste Gärung und eine zweite Gärung in demselben Behälter.

14. Verwendung nach Anspruch 13, **dadurch gekennzeichnet, dass** die schäumenden Getränke Weine, Biere oder Apfelweine sind und/oder der Schaumstabilisator in einer Konzentration von mindestens 20 mg/l in dem Getränk vorhanden ist.

15. Schäumendes Getränk, umfassend ein Rüttelhilfsmittel wie definiert in einem der Ansprüche 1 bis 3 und/oder einen Schaumstabilisator wie definiert in Anspruch 9 oder 10.

## Claims

1. Riddling adjuvant based on proteins derived from yeasts, **characterised in that**:
the riddling adjuvant has a protein content ranging from 30 to 80% relative to the total weight of the riddling adjuvant;
proteins having a molecular weight greater than 15 kDa account for at least 35% of the protein content relative to the total weight of the proteins of the riddling adjuvant;
the riddling adjuvant has a nucleic acid content of less than 10% relative to the total weight of the riddling agent; and
the riddling adjuvant has a free amino acid content ranging from 10% to 20% relative to the total weight of the riddling adjuvant.

2. Riddling adjuvant according to claim 1, **characterised in that**:
the riddling adjuvant is in solid form or dissolved in a solution;
the riddling adjuvant is in an aqueous solution;
the riddling adjuvant is in a solution at a concentration of at least 5 g/L, 10g/L, 15 g/L, 20 g/L, 25 g/L, 30 g/L, 35 g/L, 40 g/L, 45 g/L or 50 g/L;
the riddling adjuvant is in a solution at a concentration ranging from 5 g/L to 50 g/L;
and/or
the riddling adjuvant is for the production of sparkling beverages.

3. Riddling adjuvant according to claim 1 or 2, **characterised in that** it is in combination with bentonite, a bentonite-alginate mixture, alginate, kaolin, inactive yeasts, yeast cell walls, ammonium salts, tannins, copper sulphate, active dry yeast, thiamine, diammonium phosphate or mixtures thereof.

4. Tirage liqueur, **characterised in that** it comprises a sugar, a yeast and a riddling adjuvant as defined in claims 1 to 3.

5. Process for producing sparkling beverages according to a traditional method comprising a first fermentation and a second fermentation in the same container, **characterised in that** the process comprises the addition of a riddling adjuvant as defined in any one of claims 1 to 3 or a tirage liqueur according to claim 4 to a base beverage in the container.

6. Process according to claim 5, **characterised in that** the sparkling beverages are wines, beers or ciders and/or the riddling adjuvant is present in the beverage at a concentration of at least 20 mg/L.

7. Use of a riddling adjuvant as defined in any one of claims 1 to 3 or of a tirage liqueur defined in claim 4 for the production of sparkling beverages according to a traditional method comprising a first fermentation and a second fermentation in the same container.

8. The use according to claim 7, **characterised in that** the sparkling beverages are wines, beers or ciders and/or the riddling adjuvant is present in the beverage at a concentration of at least 20 mg/L.

9. Foam stabiliser based on proteins derived from yeasts, **characterised in that**:
the foam stabiliser has a protein content ranging from 30% to 80% relative to the total weight of the foam stabiliser;
proteins having a molecular weight greater than 15 kDa account for at least 35% of the protein content relative to the total weight of the proteins of the foam stabiliser;
the foam stabiliser has a nucleic acid content of less than 10% relative to the total weight of the foam stabiliser; and
the foam stabiliser has a free amino acid content ranging from 10% to 20% relative to the total weight of the foam stabiliser.

10. Foam stabiliser according to claim 9, **characterised in that**:
the foam stabiliser is in solid form or dissolved in a solution;
the foam stabiliser is in aqueous solution;
the foam stabiliser is in solution at a concentration of at least 5 g/L, 10 g/L, 15 g/L, 20 g/L, 25 g/L, 30 g/L, 35 g/L, 40 g/L, 45 g/L or 50 g/L;
the foam stabiliser is in a solution at a concentration ranging from 5 g/L to 50 g/L;
the foam stabiliser is for the production of sparkling beverages; and/or the foam stabiliser is in combination with bentonite, a bentonite-alginate mixture, alginate, kaolin, inactive yeasts, yeast cell walls, ammonium salts, tannins, copper sulphate, active dry yeast, thiamine, diammonium phosphate or mixtures thereof.

11. Process for the production of sparkling beverages according to the traditional method comprising a first fermentation and a second fermentation in the same container, **characterised in that** the process comprises the addition of a foam stabiliser as defined in claim 9 or 10 to a base beverage in the container.

12. Process according to claim 11, **characterised in that** the sparkling beverages are wines, beers or ciders and/or the foam stabiliser is present in the beverage at a concentration of at least 20 mg/L.

13. Use of a foam stabiliser as defined in claim 9 or 10 for the production of sparkling beverages according to the traditional method comprising a first fermentation and a second fermentation in the same container.

14. Use according to claim 13, **characterised in that** the sparkling beverages are wines, beers or ciders and/or the foam stabiliser is present in the beverage at a concentration of at least 20 mg/L.

15. Sparkling beverage comprising a riddling agent as defined according to any of claims 1 to 3 and/or a foam stabiliser as defined according to claim 9 or 10.
